# EUROPÄISCHE PATENTSCHRIFT

(11) **EP 0 348 732 B1**
(45) Veröffentlichungstag und Bekanntmachung des Hinweises auf die Patenterteilung: **08.09.1993**
(21) Anmeldenummer: 89110755.9
(22) Anmeldetag: 14.06.1989
(51) Int. Cl.: F16H 3/12

(54) **Verfahren zur Drehzahlsynchronisation**
Rotational-speed synchronisation method
Méthode de synchronisation de vitesses rotatives

(30) Priorität: 01.07.1988 DE 3822218
(43) Veröffentlichungstag der Anmeldung: 03.01.1990
(73) Patentinhaber: Volkswagen Aktiengesellschaft, 38436 Wolfsburg (DE)
(72) Erfinder: Prüss, Ludwig, Dipl.-Ing., D-3300 Braunschweig (DE)

(56) Entgegenhaltungen:
- EP-A- 0 166 894
- DE-A- 2 033 314
- DE-A- 2 217 482
- DE-A- 3 021 489
- FR-A- 2 609 138
- GB-A- 2 012 892
- GB-A- 2 100 384

## Beschreibung

Die Erfindung betrifft ein Verfahren zur Drehzahlsynchronisation bei Schaltvorgängen in einem Stufenwechselgetriebe gemäß dem Oberbegriff des Patentanspruchs 1 sowie zweckmäßige Einrichtungen zur Durchführung dieses Verfahrens.

In der DE-OS 30 21 489 wird für ein gattungsgemäßes Stufenwechselgetriebe eine Ausführungsform beschrieben, welche zum Zwecke der Drehzahlsynchronisation die Beeinflussung einer Getriebeeingangswelle durch einen Motor vorsieht, der über eine Kupplung mit der Getriebeeingangswelle verbindbar ist. Erfahrungsgemäß treten bei derartigen Stufenwechselgetrieben während eines Gangwechsels den Fahrkomfort beeinträchtigende Lastschläge und Ungleichförmigkeiten der Leistungsübertragung im Antriebsstrang auf. Zur Lösung dieses Problems wird in der DE-OS 30 21 489 vorgeschlagen, daß nach der bei geschlossener Kupplung erfolgenden Drehzahlanpassung der Getriebeeingangswelle der Gang in der neuen Getriebegangstufe erst dann eingelegt wird, wenn die Kupplung ausgerückt ist. Anschließend wird die Kupplung ruckfrei eingerückt, indem durch gezielte Beeinflussung des Motors dessen Drehzahl an die Drehzahl der nunmehr mit dem Abtrieb formschlüssig verbundenen Getriebeeingangswelle angeglichen wird. Dieses Verfahren zur Vermeidung von Lastschlägen und Ungleichförmigkeiten wird nur allgemein erläutert und zeigt insbesondere in steuerungstechnischer Hinsicht noch keine Ablaufschritte zur funktionsgerechten Verwirklichung auf.

Aus der DE-A-2 033 314 ist ein gattungsfremdes Stufenwechselgetriebe bekannt, bei dem zur Drehzahlsynchronisation der formschlüssig miteinander zu verbindenden Getriebeglieder nach dem Ausrücken des alten Ganges die Motordrehzahl vermindert bzw. angehoben wird. Nachteilig an der dort beschriebenen Einrichtung ist die Verminderung der Motordrehzahl in alleiniger Abhängigkeit von einer Drosselsteuerungseinrichtung. Die Reduzierung der Motordrehzahl allein durch Reduzierung der Kraftstoffzufuhr ist jedoch wesentlich weniger wirksam als eine mechanisch wirkende Motorbremse, wie sie beispielsweise aus der ebenfalls gattungsfremden GB-A-2 100 384 bekannt ist.

Der Erfindung liegt daher die Aufgabe zugrunde, für Fahrzeuge mit gattungsgemäßen Stufenwechselgetrieben den Fahrkomfort bei Schaltvorgängen durch sinnvolle Weiterentwicklung des Verfahrens zur Drehzahlsynchronisation zu verbessern.

Diese Aufgabe wird gelöst durch die kennzeichnenden Merkmale des Patentanspruchs 1. Die Unteransprüche enthalten eine zweckmäßige Weiterbildung dieses Verfahrens sowie vorteilhafte Ausführungen von Einrichtungen zur Durchführung des Verfahrens.

Erfindungsgemäß werden den Fahrkomfort beeinträchtigende Lastschläge bei Schaltvorgängen von einer Getriebegangstufe in eine andere Getriebegangstufe also vermieden, indem nach der Drehzahlanpassung der formschlüssig zu verbindenden Getriebeglieder von Antriebsseite und Abtriebsseite und einer daraufhin erfolgenden Beaufschlagungsunterbrechung des Drehzahlbeeinflussungsmittels die formschlüssige Verbindung in der anderen Getriebegangstufe hergestellt wird, wenn ein erstmaliger Gleichlauf der Getriebeglieder bei gleichzeitig positivem Motordrehzahlgradienten erfolgt. Die Schließkraft der Kupplung, deren Grad des Kupplungseingriffs beeinflußbar ist, wird so beeinflußt, daß zum Zeitpunkt der Herstellung der formschlüssigen Verbindung nur geringe vorgebbare Drehmomente durch die Kupplung übertragbar sind. Die Kupplung ermöglicht somit einen Schlupf, wenn die Drehzahl des Motors von der Drehzahl der Getriebeeingangswelle, welche nun formschlüssig mit dem Abtrieb verbunden ist, abweicht. Auf diese Weise werden große Antriebstrangverspannungen und die daraus resultierenden Lastschläge bei Drehzahldifferenzen zwischen Motor und Getriebeeingangswelle vermieden. Innerhalb einer vorgebbaren Zeitspanne wird dann im wesentlichen kontinuierlich der Betrag der übertragbaren Drehmomente auf einen vorgebbaren Endbetrag gesteigert. Durch die allmähliche Steigerung des Reibschlusses in der Kupplung wird die Motordrehzahl sanft an die Abtriebsdrehzahl der neuen Getriebegangstufe angepaßt. Damit werden bei gattungsgemäßen Stufenwechselgetrieben komfortable Schaltvorgänge möglich. Der vorgebbare Endbetrag der übertragbaren Drehmomente kann so bemessen sein, daß ein permanenter Restschlupf verbleibt. Auf diese Weise ist eine Komfortverbesserung des gesamten Fahrbetriebs möglich.

Bei einer zweckmäßigen Weiterbildung des erfindungsgemäßen Verfahrens wird vor der Herstellung der formschlüssigen Verbindung in der anderen Getriebegangstufe die Schließkraft der Kupplung derart gesteuert, daß der Motor und die Getriebeeingangswelle gerade noch verbunden sind. Der Betrag der Schließkraft wird so gewählt, daß bei der Beschleunigung oder Verzögerung der Getriebeeingangswelle deren Rotationsträgheit gerade noch überwunden wird. Dieser Betrag der Schließkraft ist wesentlich geringer als der bei geschlossenem Antriebsstrang für die vollständige Übertragung der Antriebsleistung notwendige Betrag der Schließkraft. Somit ist sichergestellt, daß einerseits zur Drehzahlsynchronisation die Getriebeeingangswelle durch den Motor beeinflußbar ist, und daß andererseits bei der Herstellung der formschlüssigen Verbindung nur geringe Drehmomente durch die Kupplung übertragbar sind. Diese erfindungsgemäße Weiterbildung des Verfahrens ist besonders dann vorteilhaft, wenn zum Zeitpunkt der Herstellung der formschlüssigen Verbindung besonders geringe Drehmomente durch die Kupplung übertragen werden sollen. Bei einer derart geringen Vorgabe der Drehmomentbeträge wäre eine weitere Öffnung der Kupplung zur Herabsetzung des Schließkraftbetrages notwendig. Die für die funktionsgerechte Kupplungsöffnung notwendige Betätigungsdauer ist dann umso geringer, je weiter die Kupplung bereits vor der Herstellung der formschlüssigen Verbindung in Öffnungsrichtung betätigt wurde.

Prinzipiell kann durch ein einziges Drehzahlbeeinflussungsmittel die Motordrehzahl erhöht oder verringert werden. Eine solche Einrichtung wäre beispielsweise bei einem Elektrohybridfahrzeug denkbar, in welchem der Motor über eine lösbare Schwungmasse mit einer elektrischen Maschine verbunden ist. Bei entsprechende Ansteuerung der elektrischen Maschine ist sowohl eine Anhebung als auch eine Verringerung der Motordrehzahl möglich.

Eine weitere zweckmäßige Einrichtung zur Durchführung des erfindungsgemäßen Verfahrens sieht eine zweigeteilte Ausführung des Drehzahlbeeinflussungsmittels vor. Die Motordrehzahl ist durch mindestens ein erstes Drehzahlbeeinflussungsmittel verminderbar und durch mindestens ein zweites Drehzahlbeeinflussungsmittel anhebbar.

Das erste Drehzahlbeeinflussungsmittel kann beispielsweise eine den Motor beaufschlagende Bremseinrichtung sein, deren Bremsbacken mit der Schwungmasse des Motors reibschlüssig verbindbar sind. Erfindungsgemäß wird eine wesentliche Verschleißverringerung an der Bremseinrichtung durch eine regel- oder steuerbare Beeinflussungsvorrichtung erzielt, welche dem Motor zugeordnet ist, und durch die während einer Bremsung des Motors dessen Antriebsmoment verminderbar ist. Eine solche Beeinflussungsvorrichtung kann beispielsweise eine Vorrichtung zur Beeinflussung der Kraftstoffzumessung, des Zündzeitpunktes oder des Kraftstoff-Luft-Gemisches sein. Darüber hinaus sind auch Kombinationen dieser Beeinflussungsmöglichkeiten denkbar.

Als zweites Drehzahlbeeinflussungsmittel können für den Fahrbetrieb eines Fahrzeugs ohnehin notwendige Drehzahlanhebungsmittel wie Drosselklappen- oder Kraftstoffeinspritzvorrichtungen verwendet werden.

Zur näheren Erläuterung wird das erfindungsgemäße Verfahren in der Zeichnung dargestellt. Es zeigt
- Figur 1: schematisch die vereinfachte Darstellung einer Antriebsanordnung,
- Figur 2: den Verlauf der Motordrehzahl über der Zeit beim Hochschalten und
- Figur 3: den Verlauf der Motordrehzahl über der Zeit beim Herunterschalten.

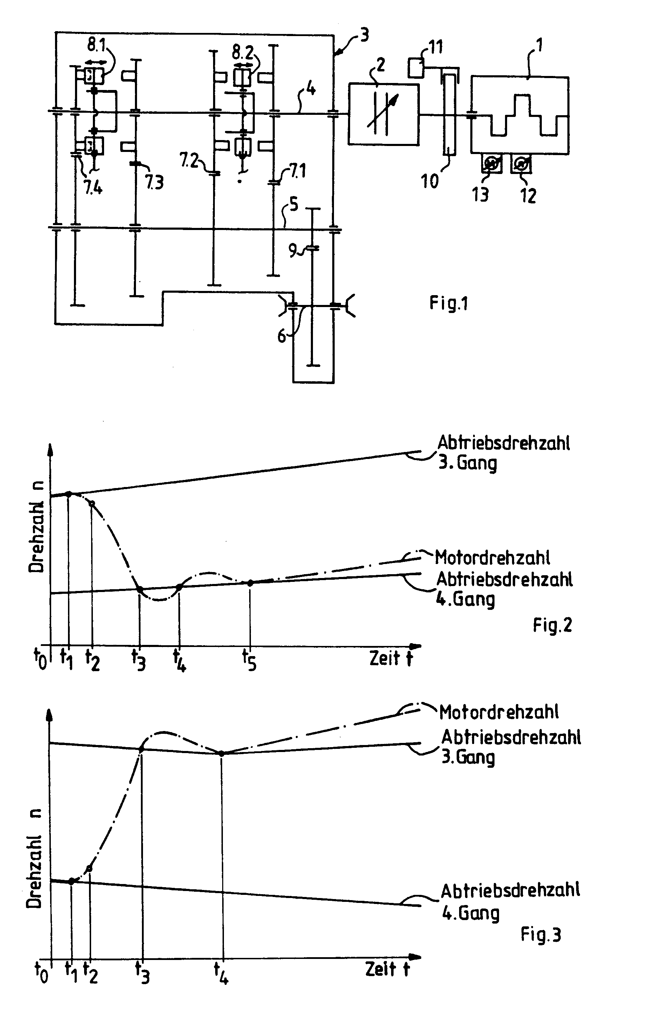

Bei der in Figur 1 schematisch dargestellten Antriebsanordnung ist mit 1 ein Motor bezeichnet, der über eine Kupplung 2, deren Grad des Kupplungseingriffes beeinflußbar ist, mit einem Getriebe 3 verbunden ist. In dem Getriebe 3 sind im wesentlichen eine Getriebeeingangswelle 4, eine erste Abtriebswelle 5 und eine zweite Abtriebswelle 6 angeordnet. Über ständig im Eingriff befindliche Zahnradpaare 7.1 - 7.4 ist die Getriebeeingangswelle 4 mit der ersten Abtriebswelle 5 durch Schiebemuffen 8.1 oder 8.2, an denen Mitnahmeverzahnungen angeordnet sind, formschlüssig verbindbar. Über das Zahnradpaar 9 und die zweite Abtriebswelle 6 wird die Antriebsleistung auf nicht dargestellte Fahrzeugräder übertragen. An dem Motor 1 ist eine Schwungmasse 10 angeordnet, welche durch eine Bremseinrichtung 11 beaufschlagbar ist. Darüber hinaus sind dem Motor 1 noch ein Drehzahlanhebungsmittel 12 und eine Mometenbeeinflussungsvorrichtung 13 zugeordnet. Mit Hilfe dieser beispielhaften Ausführungsform einer Antriebsanordnung wird das erfindungsgemäße Verfahren nun näher beschrieben.

Das in Figur 2 dargestellte Diagramm veranschaulicht beispielhaft mit einer strichpunktierten Linie den qualitativen Verlauf der Motordrehzahl und mit durchgezogenen Linien den qualitativen Verlauf der Abtriebsdrehzahlen über der Zeit beim Schalten vom dritten in den vierten Gang. Zum Zeitpunkt t₀ ist der vom Motor 1 bis zu den Fahrzeugrädern reichende Antriebsstrang zunächst geschlossen. Beim Erreichen einer vorgebbaren Motorgrenzdrehzahl wird vor dem Zeitpunkt t₁ zunächst das Motormoment durch die Momentenbeeinflussungsvorrichtung 13 - beispielsweise eine Vorrichtung zur Verstellung des Zündzeitpunktes oder der Kraftstoffmenge - auf einen vorgebbaren Mindestbetrag reduziert. Zum Zeitpunkt t₁ wird anschließend der Antriebsstrang unterbrochen, indem die formschlüssig mit der Getriebeeingangswelle 4 verbundene Schiebemuffe 8.1 ausgerückt wird, so daß das Losrad des Zahnradpaares 7.3 frei auf der Getriebeeingangswelle 4 umläuft. Die zuvor eingeleitete Reduzierung des Motormoments leitet nach der Aufhebung des Formschlusses einen Abfall der Motordrehzahl ein. Zum Zeitpunkt t₂ beaufschlagt die Bremseinrichtung 11 die fest mit dem Motor 1 verbundene Schwungmasse 10 und bewirkt bei weiterhin geschlossener Kupplung 2 einen verstärkten Abfall der Motordrehzahl und damit auch der Drehzahl der Getriebeeingangswelle 4, bis zum Zeitpunkt t₃ die Mitnahmeverzahnung der Schiebemuffe 8.1 und das Losrad des Zahnradpaares 7.4 gleiche Drehzahlen aufweisen. Die Beaufschlagung der Schwungmasse 10 durch die Bremseinrichtung 11 wird dann zum Zeitpunkt t₃ unterbrochen. Trägheitsbedingt sackt anschließend der Betrag der Getriebeeingangswellendrehzahl zunächst unter den Betrag der Drehzahl des Losrades im Zahnradpaar 7.4 und steigt dann wieder durch die Wirkung des Drehzahlanhebungsmittels 12 an. Zum Zeitpunkt t₄ wird erstmalig mit positivem Motordrehzahlgradienten Gleichlauf zwischen der Mitnahmeverzahnung der Schiebemuffe 8.1 und dem Losrad des Zahnradpaares 7.4 erreicht. Diese Getriebeglieder werden durch Einrücken der Schiebemuffe 8.1 nun formschlüssig miteinander verbunden, so daß der Antriebsstrang wieder geschlossen ist. Die Schließkraft der Kupplung 2 ist zum Zeitpunkt t₄ so eingestellt, daß bei der Herstellung der formschlüssigen Verbindung innerhalb des vierten Getriebeganges nur vorgebbare Drehmomente durch die Kupplung übertragbar sind. Bei eventuell auftretenden Lastschlägen im Motor 1 kann durch einen Schlupf in der Kupplung 2 eine Antriebsstrangverspannung vermieden werden, weil die nunmehr formschlüssig mit dem Abtrieb verbundene Getriebeeingangswelle 4 begrenzt gegen - die in der Zeichnung nicht bezifferte Motorantriebswelle - verdrehbar ist. Mittels einer im wesentlichen kontinuierlichen Steigerung des Betrages der übertragbaren Drehmomente innerhalb einer vorgebbaren Zeitspanne kann dann die Motordrehzahl sanft an die Drehzahl der Getriebeeingangswelle 4 angepaßt werden. Zum Zeitpunkt t₅ ist die Drehzahlanpassung beendet. Auf diese Weise sind bei gattungsgemäßen Stufenwechselgetrieben Schaltvorgänge mit gutem Fahrkomfort realisierbar. Zur Steigerung des allgemeinen Fahrkomforts kann die Drehzahlanpassung auch so bemessen sein, daß in der Kupplung 2 über den Zeitpunkt t₅ hinaus ein permanenter Restschlupf verbleibt.

Die Beeinflussung der Kupplungsschließkraft kann in der Zeitspanne von t₁ bis t₄ erfolgen. Es kann zweckmäßig sein, vor der Herstellung der formschlüssigen Verbindung innerhalb des vierten Ganges die Schließkraft der Kupplung 2 durch gezielte Steuerung oder Regelung so herabzusetzen, daß der Motor 1 und die Getriebeeingangswelle 4 gerade noch verbunden sind. Bei einer gegebenenfalls notwendig werdenden Absenkung der Schließkraft auf einen noch geringeren Betrag kann in diesem Falle die für den Zeitpunkt t₄ erforderliche Öffnung der Kupplung schneller realisiert werden, als bei einer zuvor nicht in Öffnungsrichtung betätigten Kupplung 2. Auf diese Weise wird die Ansprechzeit der Kupplung 2 verkürzt. Dies kann zu merklichen Verbesserungen des Schaltkomforts führen.

Eine besonders zweckmäßige Ausführungsform einer Einrichtung zur Durchführung des erfindungsgemäßen Verfahrens sieht vor, daß während der Beaufschlagung des Motors 1 durch die Bremseinrichtung 11 das Antriebsmoment des Motors 1 durch mindestens eine - in der Zeichnung nicht dargestellte - steuerbare oder regelbare Beeinflussungsvorrichtung verringert wird. Durch diese Maßnahme kann der Verschleiß an der Bremseinrichtung 11 reduziert werden.

Den Ablauf des erfindungsgemäßen Verfahrens beim Herunterschalten zeigt Figur 3. Zum Zeitpunkt t₀ ist beispielsweise bei geringer Zugkraft des Motors 1 der vierte Gang eingelegt. Beim Erreichen einer vorgebbaren Motorgrenzdrehzahl wird vor dem Zeitpunkt t₁ durch die Momentenbeeinflussungsvorrichtung 13 das Restmoment des Motors 1 auf einen vorgebbaren Mindestbetrag reduziert. Anschließend wird zum Zeitpunkt t₁ die formschlüssige Verbindung innerhalb des vierten Ganges durch Ausrücken der Schiebemuffe 8.1 aufgehoben. Daraufhin wird die momentenreduzierende Wirkung der Momentenbeeinflussungsvorrichtung 13 aufgehoben, so daß eine Erhöhung der Motordrehzahl einsetzt. Zum Zeitpunkt t₂ wird die Motordrehzahl bei geschlossener Kupplung 2 durch das Drehzahlanhebungsmittel 12 in stärkerem Maße erhöht, bis zum Zeitpunkt t₃ ein erstmaliger Gleichlauf zwischen der Mitnahmeverzahnung der Schiebemuffe 8.1 und dem Losrad des Zahnradpaares 7.3 mit positivem Motordrehzahlgradienten erreicht ist. Nach der Beaufschlagungsunterbrechung des Drehzahlanhebungsmittels 12 zum Zeitpunkt t₃ steigt die Motordrehzahl zunächst noch trägheitsbedingt leicht an, um dann anschließend wieder abzufallen. Analog zu dem in Figur 2 erläuterten Verfahren wird die Schiebemuffe 8.1 zum Zeitpunkt t₃ eingerückt und die Kupplung 2 so gesteuert, daß mit geringstmöglicher Verspannung des Antriebsstranges zum Zeitpunkt t₄ wieder eine sanfte Anpassung der Motordrehzahl an die Drehzahl der Getriebeeingangswelle 4 gewährleistet ist.

Das vorstehend beschriebene Verfahren zur Vermeidung von Lastschlägen ist selbstverständlich bei jedem beliebigen Schaltvorgang möglich und ist nicht auf synchrongliederfreie und viergängige Stufenwechselgetriebe mit und ohne Synchronglieder beschränkt.

## Patentansprüche

1. Verfahren zur Drehzahlsynchronisation bei Schaltvorgängen von einer Getriebegangstufe (7.3) in eine andere Getriebegangstufe (7.4) in einem Stufenwechselgetriebe (3), das antriebsseitig im wesentlichen über eine Kupplung (2), deren Grad des Kupplungseingriffs beeinflußbar ist, mit einem Motor (1) und abtriebsseitig mit den Antriebsrädern eines Fahrzeugs verbindbar ist, wobei zur Drehzahlsynchronisation
- beim Erreichen einer vorgebbaren Motorgrenzdrehzahl durch mindestens eine Momentenbeeinflussungsvorrichtung (13) das Motormoment auf einen vorgebbaren Betrag reduziert wird,
- anschließend eine formschlüssige Verbindung (8.1, 7.3) innerhalb der einen Getriebegangstufe (7.3) aufgehoben wird,
- anschließend eine Änderung der Motordrehzahl bei geschlossener Kupplung (2) durch mindestens ein Drehzahlbeeinflussungsmittel (11) vorgenommen wird,
- beim erstmaligen Gleichlauf der in der anderen Getriebegangstufe (7.4) formschlüssig zu verbindenden Getriebeglieder von Antriebsseite und Abtriebsseite (8.1, 7.4) die Beaufschlagung des Drehzahlbeeinflussungsmittels (11) unterbrochen wird,
dadurch gekennzeichnet, daß
- beim erstmalig mit positivem Motordrehzahlgradienten erfolgenden Gleichlauf der Getriebeglieder (8.1, 7.4) die formschlüssige Verbindung in der anderen Getriebegangstufe (7.4) hergestellt wird,
- die Schließkraft der Kupplung (2) so beeinflußt wird, daß bei der Herstellung der formschlüssigen Verbindung (8.1, 7.4) nur geringe vorgebbare Drehmomente durch die Kupplung (2) übertragbar sind, und daß dann innerhalb einer vorgebbaren Zeitspanne im wesentlichen kontinuierlich der Betrag dar übertragbaren Drehmomente auf einen vorgebbaren Endbetrag gesteigert wird.

2. Verfahren nach Anspruch 1, dadurch gekennzeichnet, daß vor der Herstellung der formschlüssigen Verbindung (8.1, 7.4) in der anderen Getriebegangstufe (7.4) die Schließkraft der Kupplung (2) derart gesteuert wird, daß in einer die Verbindung zwischen dem Motor (1) und einer Getriebeeingangswelle (4) aufrechterhaltenden Weise bei einer Beschleunigung oder Verzögerung der Getriebeeingangswelle (4) deren Rotationsträgheit gerade noch überwunden wird.

3. Verfahrens nach Anspruch 1, dadurch gekennzeichnet, daß die Motordrehzahl durch mindestens ein erstes Drehzahlbeeinflussungsmittel (11) vermindert oder durch mindestens ein zweites Drehzahlbeeinflussungsmittel (12) angehoben wird.

4. Verfahren nach Anspruch 3, dadurch gekennzeichnet, daß die Verminderung der Motordrehzahl durch eine den Motor beaufschlagende Bremseinrichtung erfolgt.

5. Verfahren nach Anspruch 4, dadurch gekennzeichnet, daß während einer Bremsung des Motors (1) dessen Antriebsmoment durch die Beeinflussungsvorrichtung (13) beeinflußt wird.

6. Verfahren nach Anspruch 5, dadurch gekennzeichnet, daß die Verminderung des Antriebsmoments durch die Beeinflussungsvorrichtung (13) von einer Steuerungseinrichtung gesteuert wird.

7. Verfahren nach Anspruch 5, dadurch gekennzeichnet, daß die Verminderung des Antriebsmoments durch die Beeinflussungsvorrichtung (13) von einer Regelungseinrichtung geregelt wird.

8. Verfahren nach Anspruch 5, dadurch gekennzeichnet, daß durch die Beeinflussungsvorrichtung (13) die Kraftstoffzumessung beinflußt wird.

9. Verfahren nach Anspruch 5, dadurch gekennzeichnet, daß durch die Beeinflussungsvorrichtung (13) der Zündzeitpunkt beeinflußt wird.

10. Verfahren nach Anspruch 5, dadurch gekennzeichnet, daß durch die Beeinflussungsvorrichtung (13) das Kraftstoff-Luft-Gemisch beeinflußt wird.

## Claims

1. Method for synchronising the rotational speed when changing gear from one gear step (7.3) to another gear step (7.4) in a stepped change speed gear box (3) which can be connected on the drive side to a motor (1) substantially by way of a clutch (2), whose level of clutch engagement can be influenced, and on the driven side to the driven wheels of a motor vehicle, wherein in order to synchronise the rotational speed;
- upon achieving a predeterminable limit of rotational speed of the engine, the engine torque is reduced by means of at least one torque influencing device (13) to a predeterminable amount,
- subsequently a form-locking connection (8.1, 7.3) within one gear step (7.3) is released,
- subsequently the engine rotational speed is changed in the cage of a closed clutch (2) by means of at least one rotational speed influencing device (11),
- the influence of the rotational speed influencing device (11) is interrupted when the gear member (8.1) on the drive side and the gear member (7.4) on the driven side are synchronised for the first time, the said gear members (8.1, 7.4) are to be connected in the other gear step (7.4) in a form-locking manner,
characterised in that:
- the form-locking connection in the other gear step (7.4) is produced when the gear members (8.1, 7.4) are synchronised for the first time with a simultaneous positive rotational speed gradient,
- the closing force of the clutch (2) is influenced in such a way that when producing the form-locking connection (8.1, 7.4) only small predeterminable amounts of torque can be transmitted by the clutch (2) and then, within a predeterminable period of time, the amount of torque which can be transmitted is increased substantially continuously to a predeterminable end amount.

2. Method according to claim 1, characterised in that prior to producing the form-locking connection (8.1, 7.4) in the other gear step (7.4), the closing force of the clutch (2) is controlled in such a way that when a gear input shaft (4) is accelerated or retarded, the rotational inertia of the gear input shaft (4) is barely overcome in a manner which maintains the connection between the engine (1) and the gear input shaft (4).

3. Method according to claim 1, characterised in that the rotational speed of the engine is reduced by means of at least a first rotational speed influencing device (11) or is increased by means of at least a second rotational speed influencing device (12).

4. Method according to claim 3, characterised in that the rotational speed of the engine is reduced by means of a braking device influencing the engine.

5. Method according to claim 4, characterised in that during the braking process of the engine (1) the drive torque of the engine is reduced by means of the influencing device (13).

6. Method according to claim 5, characterised in that the reduction in the drive torque is controlled by means of the influencing device (13) of a control device.

7. Method according to claim 5, characterised in that the reduction in drive torque is regulated by means of the influencing device (13) of a regulating device.

8. Method according to claim 5, characterised in that the fuel metering process is influenced by means of the influencing device (13).

9. Method according to claim 5, characterised in that the moment of ignition is influenced by means of the influencing device (13).

10. Method according to claim 5, characterised in that the fuel-air mixture is influenced by means of the influencing device (13).

## Revendications

1. Procédé de synchronisation des vitesses de rotation pendant les passages d'un étage de transmission (7.3) à un autre étage de transmission (7.4) dans une boîte de vitesses (3) dont le côté menant peut être relié à un moteur (1) essentiellement par un embrayage (2) sur le degré d'entrée en prise duquel il est possible d'agir et dont le côté mené peut être relié aux roues motrices d'un véhicule, procédé suivant lequel, pour la synchronisation des vitesses de rotation, le couple du moteur est réduit à une valeur prescrite par au moins un dispositif (13) agissant sur le couple lorsqu'une vitesse limite prescrite du moteur est atteinte, ensuite, une liaison par accouplement (8.1, 7.3) est supprimée à l'intérieur d'un étage de transmission (7.3), il est procédé ensuite à une modification de la vitesse de rotation du moteur, alors que l'embrayage (2) est fermé, par au moins un organe (11) agissant sur la vitesse de rotation, puis l'attaque par l'organe (11) agissant sur la vitesse de rotation est interrompue à l'instant auquel est atteinte pour la première fois la synchronisation des organes de la boîte, côté menant et côté mené (8.1, 7.4), devant être reliés par accouplement dans l'autre étage de transmission de la boîte (7.4), caractérisé en ce qu'à l'instant où un gradient positif de vitesse de rotation du moteur produit pour la première fois une synchronisation des organes de la boîte (8.1, 7.4), la liaison par accouplement est établie dans l'autre étage de transmission de la boîte (7.4), l'action exercée sur la force de fermeture de l'embrayage (2) est telle que lors de l'établissement de la liaison par accouplement (8.1, 7.4), seuls de faibles couples prescrits de rotation soient transmissibles par l'embrayage (2) et que, pendant un intervalle de temps prédéterminé, la valeur des couples de rotation transmissibles soit alors élevée sensiblement en continu à une valeur finale prescrite.

2. Procédé selon la revendication 1, caractérisé en ce que, avant l'établissement de la liaison par accouplement (8.1, 7.4) dans l'autre étage de transmission (7.4), la force de fermeture de l'embrayage (2) est commandée de manière que, lors d'une accélération ou d'une décélération de l'arbre d'entrée (4) de la boîte, son inertie de rotation soit encore juste surmontée de manière qui conserve la liaison entre le moteur (1) et l'arbre d'entrée (4) de la boîte.

3. Procédé selon la revendication 1, caractérisé en ce que la vitesse du moteur est réduite par au moins un premier organe (11) agissant sur cette vitesse ou est élevée par au moins un second organe (12) agissant sur cette vitesse.

4. Procédé selon la revendication 3, caractérisé en ce que la réduction de la vitesse de rotation du moteur est produite par un dispositif de freinage qui attaque le moteur.

5. Procédé selon la revendication 4, caractérisé en ce que, pendant un freinage du moteur (1), le dispositif (13) agissant sur lui en diminue le couple d'entraînement.

6. Procédé selon la revendication 5, caractérisé en ce que la diminution du couple de commande par le dispositif (13) agissant sur le moteur est commandée par un dispositif de commande.

7. Procédé selon la revendication 5, caractérisé en ce que la diminution du couple de commande produite par le dispositif (13) agissant sur le moteur est réglée par un dispositif de réglage.

8. Procédé selon la revendication 5, caractérisé en ce que le dispositif (13) agissant sur le moteur agit sur le dosage de carburant.

9. Procédé selon la revendication 5, caractérisé en ce que le dispositif (13) agissant sur le moteur agit sur l'instant d'allumage.

10. Procédé selon la revendication 5, caractérisé en ce que le dispositif (13) agissant sur le moteur agit sur le mélange de carburant et d'air.
